# EUROPEAN PATENT APPLICATION

(11) **EP 3 850 996 A1**
(43) Date of publication of application: **21.07.2021**
(21) Application number: 21150355.2
(22) Date of filing: 06.01.2021
(51) Int. Cl.: A47J 31/44, A47J 31/06

(54) **COFFEE EXTRACTION ASSEMBLY AND COFFEE BOX FOR COFFEE MACHINE**

(30) Priority: 16.01.2020 CN 202010048470; 16.01.2020 CN 202020099672 U
(71) Applicant: Tsann Kuen (Zhangzhou) Enterprise Co., Ltd., Fujian 363107 (CN)
(72) Inventor: HAN, Mengxin, Zhang Zhou, Fujian 363107 (CN); ZHANG, Yanxiang, Zhang Zhou, Fujian 363107 (CN)
(74) Representative: Zaboliene, Reda

(57) **Abstract**

A coffee extraction assembly and a coffee box are provided. The coffee extraction assembly includes an elastic filter tray and a drip tray. The elastic filter tray is disposed above the drip tray. The drip tray is provided with an extraction groove and a coffee outlet channel. The extraction groove is in fluid communication with the coffee outlet channel. The elastic filter tray is provided with at least one filtering hole at a position corresponding to the extraction groove. The coffee liquid extracted for the first time enters the extraction groove via the at least one filtering hole under pressure. The coffee extraction assembly can be used for coffee first and secondary pressurization extractions. The filtering hole on the elastic filter tray can be elastically deformed and is not easy to be blocked, to ensure the pressure stability of each extraction and improve the coffee taste.

## Description

### CROSS-REFERENCE TO RELATED APPLICATIONS

The present invention is based on and claims the priority of Chinese patent application No. 202020099672.3 and the priority of Chinese patent application No. 202010048470.0, both of which are filed on the same day of January 16, 2020. The contents of the above-identified applications are incorporated herein by reference.

### TECHNICAL FIELD

The present invention relates to the technical field of household appliances, and in particular, to a coffee extraction assembly and a coffee box suitable for use in a coffee machine.

### BACKGROUND OF THE INVENTION

Coffee extraction is a process of extracting the flavor from the coffee powder by using water. The coffee contains various water-soluble compounds and other compounds. The substances extracted in the extraction process directly affect the flavor and aroma of coffee. The coffee extraction process involves many variables, and coffee making by using a coffee machine can ensure that the operation is simple and the coffee with better taste can be obtained. However, most coffee machines on the market have the problem that the filter holes are easily blocked during extraction, so that the extraction pressure is unstable, and the stirring is insufficient during coffee discharging, so that the taste of the coffee is not improved.

Further, existing coffee machines can support the production of different quantities of coffee, such as single cup or double cup. However, different quantities of coffee need to use different amounts of coffee powder. Therefore, the coffee machine needs to configure various coffee boxes of different specifications in order to contain different weights of coffee powder, which increases the production cost.

### SUMMARY OF THE INVENTION

In view of the above, the present invention provides a coffee extraction assembly which can ensure the pressure stability of each extraction, so as to improve the coffee taste.

The present invention further provides a coffee box which can adjust the capacity of the coffee box by switching the installation positions of the drip tray, so as to reduce the production cost.

The present invention provides a coffee extraction assembly including an elastic filter tray and a drip tray. The elastic filter tray is disposed above the drip tray. The drip tray is provided with an extraction groove and a coffee outlet channel. The extraction groove is in fluid communication with the coffee outlet channel. The elastic filter tray is provided with at least one filtering hole at a position corresponding to the extraction groove. The coffee liquid extracted for the first time enters the extraction groove via the at least one filtering hole under pressure.

Further, a side wall of the extraction groove includes a high part and a low part. The high part abuts against a lower surface of the elastic filter tray. A coffee liquid outlet is formed between the lower part and the lower surface of the elastic filter tray to enable the extraction groove to be in fluid communication with the coffee outlet channel.

Further, the coffee outlet channel includes a buffer passage and a discharge passage. The buffer passage is arranged in a circle around the extraction groove. The buffer passage is in fluid communication with a liquid outlet of the drip tray through the discharge passage. A buffer wall is provided at the connection point between the buffer passage and the discharge passage.

Further, the side wall of the extraction groove includes two low parts which are symmetrically arranged. The coffee outlet channel includes two discharge passages which are symmetrically arranged. A connecting line between the two lower parts is orthogonal to a connecting line between the two discharge passages.

Further, the extraction groove is arranged centrally in the drip tray, and the at least one filtering hole is arranged centrally in the elastic filter tray.

Further, an upper surface of the drip tray is provided with a mounting groove. A lower surface of the elastic filter tray is provided with a mounting rib. The elastic filter tray and the drip tray are detachably connected through a cooperation of the mounting rib and the mounting groove.

Further, the elastic filter tray includes a surrounding wall on an upper edge of the elastic filter tray. The surrounding wall is configured to abut against a lower surface of the filter screen.

Further, the elastic filter tray is made of an elastic material.

The present invention further provides a coffee box including a filter screen, a shell and a coffee extraction assembly as described above. The filter screen and the coffee extraction assembly are installed in the shell and arranged along the top-to-bottom direction. The filter screen is configured to filter the coffee powder to obtain the coffee liquid extracted for the first time.

Further, the filter screen is detachably installed in the shell.

Further, a first limiting structure, a second limiting structure and a third limiting structure are provided inside the shell. The first limiting structure and the second limiting structure are located at different positions in an axial direction of the shell. The drip tray is provided with a fourth limiting structure and a fifth limiting structure. The fourth limiting structure is configured to cooperate with the third limiting structure to restrict the rotation direction of the drip tray. The fifth limiting structure is configured to cooperate with the first limiting structure or the second limiting structure to fix the drip tray at different positions in the axial direction of the shell.

Further, the fourth limiting structure is configured to cooperate with the third limiting structure to restrict the drip tray to be rotated in a first direction and a second direction. When the drip tray is rotated in the first direction, the fifth limiting structure is engaged and fixed with the first limiting structure; and when the drip tray is rotated in the second direction, the fifth limiting structure is engaged and fixed with the second limiting structure, wherein the first direction is opposite to the second direction.

Further, the first limiting structure includes at least two first limiting parts spaced apart along a circumferential direction of the shell. The second limiting structure includes at least two second limiting parts spaced apart along the circumferential direction of the shell. Each first limiting part and each second limiting part protrude from an inner surface of a side wall of the shell and extend along the circumferential direction of the shell. The fifth limiting structure includes at least two fifth limiting parts spaced apart along a circumferential direction of the drip tray. The fifth limiting parts protrude from an outer surface of a side wall of the drip tray and are located on the same plane. A lower surface of the fifth limiting part is cooperated with an upper surface of the first limiting part or the second limiting part.

Further, the first limiting parts are closer to the bottom of the shell than the second limiting parts. One second limiting part is arranged between two adjacent first limiting parts. A passage is provided between each first limiting part and a neighboring second limiting part for the fifth limiting part to insert into the shell.

Further, an upper surface of the first limiting part is provided with a first limiting protrusion, and an upper surface of the second limiting part is provided with a second limiting protrusion. A lower surface of the fifth limiting part is provided with a limiting groove. The limiting groove is cooperated with the first limiting protrusion or the second limiting protrusion to restrict the circumferential movement of the drip tray.

Further, the third limiting structure is a limiting block protruding from a side surface of one first limiting part or one second limiting part. The fourth limiting structure includes a first sliding groove and a second sliding groove spaced apart on the outer surface of the side wall of the drip tray. The first sliding groove and the second sliding groove each extend along a circumferential direction of the drip tray. The second sliding groove is closer to the top of the drip tray than the first sliding groove. When the drip tray is rotated in the first direction, the limiting block slides in the second sliding groove, and the fifth limiting part is rotated to be engaged and fixed with the first limiting part; and when the drip tray is rotated in the second direction, the limiting block slides in the first sliding groove, and the fifth limiting part is rotated to be engaged and fixed with the second limiting part.

Further, the first limiting parts have three in number and they are evenly spaced. The second limiting parts have three in number and they are evenly spaced. The fifth limiting parts have three in number and they are evenly spaced.

Further, an upper space formed by the drip tray and the shell is configured to install the elastic filter tray and the filter screen, and the filter screen is disposed above the elastic filter tray.

The present invention further provides a coffee machine including the coffee box as described above.

The coffee extraction assembly of the present invention has a simple structure and can be used for coffee first and secondary pressurization extractions. The filtering hole on the elastic filter tray can be elastically deformed and is not easy to be blocked, to ensure the pressure stability of each extraction and improve the coffee taste.

Further, in the coffee box of the present invention, the drip tray can be installed at different positions from different directions to adjust the capacity of the coffee box, and the operation is simple, without the need to provide various coffee boxes of different specifications to make different quantities of coffee, so that the production cost is low.

### BRIEF DESCRIPTION OF THE DRAWINGS

Fig. 1 is an exploded schematic view of a coffee box according to the first embodiment;
Fig. 2 is a top view of the coffee box in Fig. 1 after assembly;
Fig. 3 is a schematic view of the shell of the coffee box in Fig. 1;
Fig. 4 is another schematic view of the shell of the coffee box in Fig. 1;
Fig. 5 is a schematic view of the drip tray of the coffee box in Fig. 1;
Fig. 6 is another schematic view of the drip tray of the coffee box in Fig. 1;
Fig. 7 is a schematic view of the coffee box in Fig. 1 in the case of a single cup structure;
Fig. 8 is a cross-sectional view of the coffee box in Fig. 2 along the II-II line in the single cup structure;
Fig. 9 is a schematic view of the coffee box in Fig. 1 in the case of a double cup structure;
Fig. 10 is a cross-sectional view of the coffee box in Fig. 2 along the II-II line in the double cup structure;
Fig. 11 is a schematic view of the connection structure between the drip tray and the elastic filter tray of the coffee box in Fig. 1;
Fig. 12 is a schematic view of the elastic filter tray in Fig. 11;
Fig. 13 is a top schematic view of a coffee box according to the second embodiment; and
Fig. 14 is a sectional view of the coffee box in Fig. 13 along the III-III line.

### DETAILED DESCRIPTION OF PREFERRED EMBODIMENTS

In the following, the implementation mode of the present invention is described by specific embodiments. Persons familiar with the technology can easily understand other advantages and effects of the present invention from the contents disclosed in the specification.

In the following description, several embodiments of the present invention are described with reference to the accompanying drawings. It should be understood that other embodiments may be used and that changes in mechanical composition, structure, electricity and operation may be made without departing from the spirit and scope of the present invention. The following detailed description should not be considered restrictive, and the scope of the embodiments of the present invention is limited only by the claims of the patent. The terms used herein are intended to describe specific embodiments only and are not intended to limit the present invention.

### First embodiment

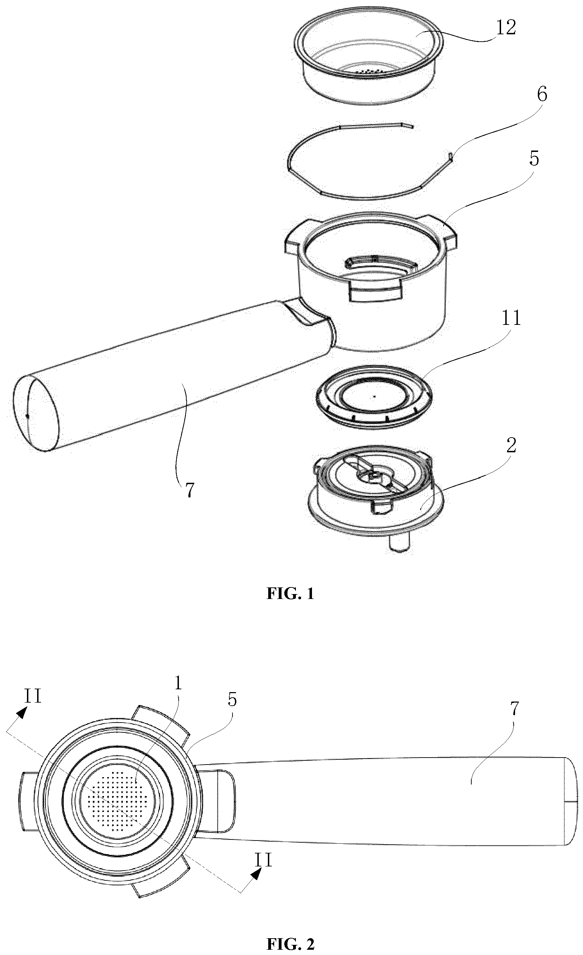

Fig. 1 is an exploded schematic view of a coffee box according to the first embodiment. Fig. 2 is a top view of the coffee box in Fig. 1. As shown in Fig. 1, the coffee box of this embodiment includes a shell 5, a drip tray 2 and a filter screen assembly 1. The filter screen assembly 1 includes a filter screen 12 and an elastic filter tray 11. The filter screen 12, the elastic filter tray 11 and the drip tray 2 are detachably installed in the shell 5 and arranged along the top-to-bottom direction.

The shell 5 is cylindrical in shape, and an outer wall of the shell 5 is provided with a handle 7 to facilitate the use of the coffee box. A first limiting structure, a second limiting structure and a third limiting structure are provided inside the shell 5. The first limiting structure and the second limiting structure are located at different positions in the axial direction of the shell 5, that is, the first limiting structure and the second limiting structure are arranged at different heights in the shell 5.

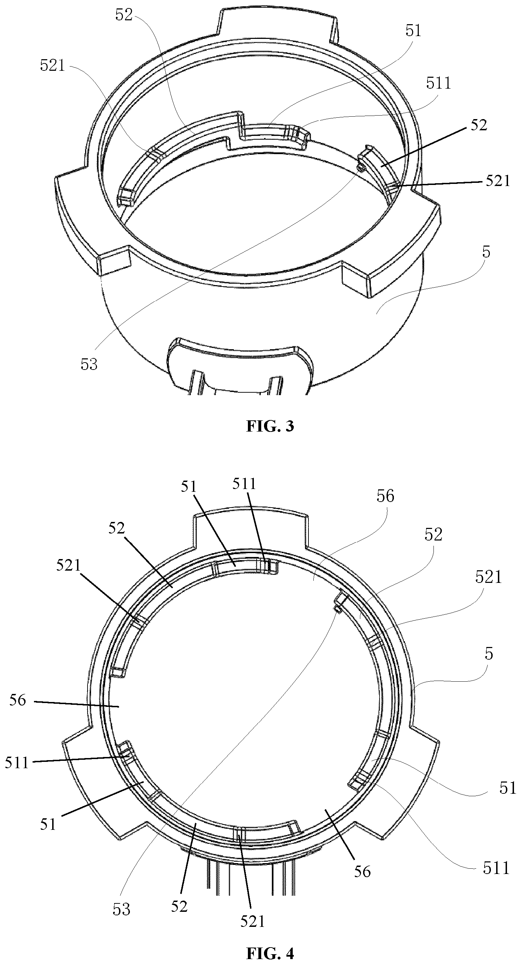

Referring to Fig. 3 and Fig. 4, in this embodiment, the first limiting structure is closer to the bottom of the shell 5 than the second limiting structure. The first limiting structure includes at least two first limiting parts 51 spaced apart along the circumferential direction of the shell 5. The second limiting structure includes at least two second limiting parts 52 spaced apart along the circumferential direction of the shell 5. Each first limiting part 51 and each second limiting part 52 protrude from the inner surface of the side wall of the shell 5 and extend along the circumferential direction of the shell 5. Preferably, the first limiting parts 51 have three in number and they are evenly spaced, the second limiting parts 52 have three in number and they are evenly spaced. The first limiting parts 51 are closer to the bottom of the shell 5 than the second limiting parts 52. One second limiting part 52 is arranged between two adjacent first limiting parts 51. A passage 56 is provided between each first limiting part 51 and a neighboring second limiting part 52 for the drip tray 2 to insert from the bottom of the shell 5 and move upward towards the top of the shell 5. According to the number and size of the passages 56 as required, the circumferential distance between each first limiting part 51 and the neighboring second limiting part 52 can be adjusted.

The third limiting structure protrudes from the side surface of the first limiting structure or the second limiting structure. In this embodiment, the third limiting structure is a limiting block 53 protruding from the side surface of one first limiting part 51 or one second limiting part 52. It can be understood that the third limiting structure can also be a limiting block 53 protruding from the inner wall of the shell 5, so long as the front end of the limiting block 53 extends beyond the side surface of the first limiting part 51 or the second limiting part 52, and the limiting block 53 can be cooperated with the drip tray 2 without interference to the movement of the drip tray 2.

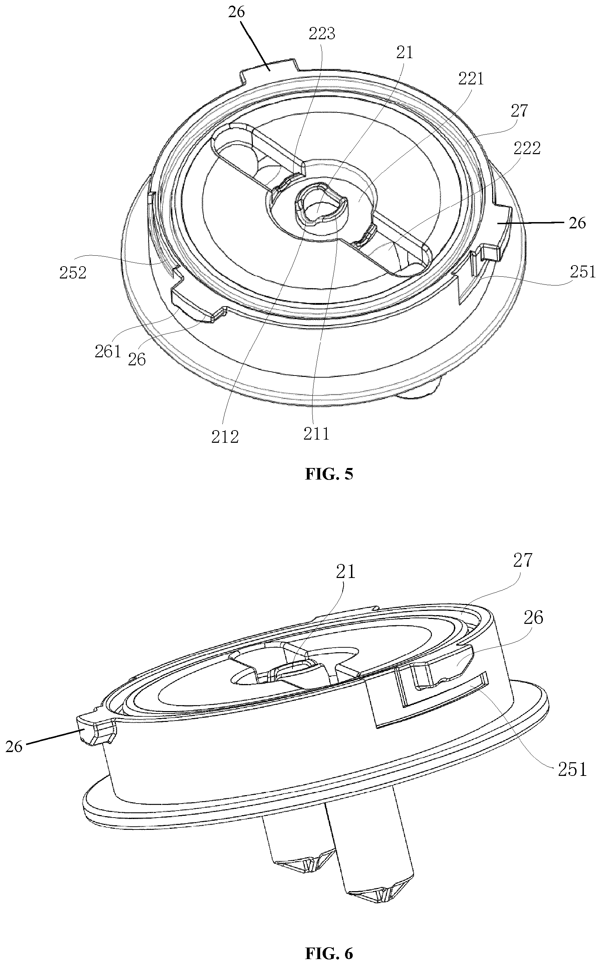

The drip tray 2 is provided with a fourth limiting structure and a fifth limiting structure. The fourth limiting structure is used to cooperate with the third limiting structure to restrict the rotation direction of the drip tray 2. The fifth limiting structure is used to cooperate with the first limiting structure or the second limiting structure to fix the drip tray 2 at different positions in the axial direction of the shell 5. Referring also to Figs. 5 and 6, the fifth limiting structure includes at least two fifth limiting parts 26 spaced apart along the circumferential direction of the drip tray 2. The fifth limiting parts 26 protrude from the outer surface of the side wall of the drip tray 2 and are located on the same plane. Preferably, the fifth limiting parts 26 have three in number and they are evenly spaced. The lower surface of the fifth limiting part 26 is cooperated with the upper surface of the first limiting part 51 or the second limiting part 52 for positioning. In this embodiment, the upper surface of the first limiting part 51 is provided with a first limiting protrusion 511, the upper surface of the second limiting part 52 is provided with a second limiting protrusion 521, the lower surface of the fifth limiting part 26 is provided with a limiting groove 261, and the limiting groove 261 is cooperated with the first limiting protrusion 511 or the second limiting protrusion 521 to restrict the circumferential movement of the drip tray 2 at different axial positions, that is, to restrict the rotation of the drip tray 2.

The fourth limiting structure includes a first sliding groove 251 and a second sliding groove 252 spaced apart on the outer surface of the side wall of the drip tray 2. The first sliding groove 251 and the second sliding groove 252 each extend along the circumferential direction of the drip tray 2, and the second sliding groove 252 is closer to the top of the drip tray 2 than the first sliding groove 251. Specifically, the first sliding groove 251 is located under one of the fifth limiting parts 26, and the second sliding groove 252 is located between the other two fifth limiting parts 26. When the first sliding groove 251 or the second sliding groove 252 is aligned with the limiting block 53 on the shell 5, the fifth limiting part 26 is aligned with the passage 56 between the first limiting part 51 and the second limiting part 52. At this time, the drip tray 2 can be inserted into a corresponding height from the bottom of the shell 5, and the rotation direction of the drip tray 2 at this height is determined by the cooperation of the first sliding groove 251 or the second sliding groove 252 with the limiting block 53.

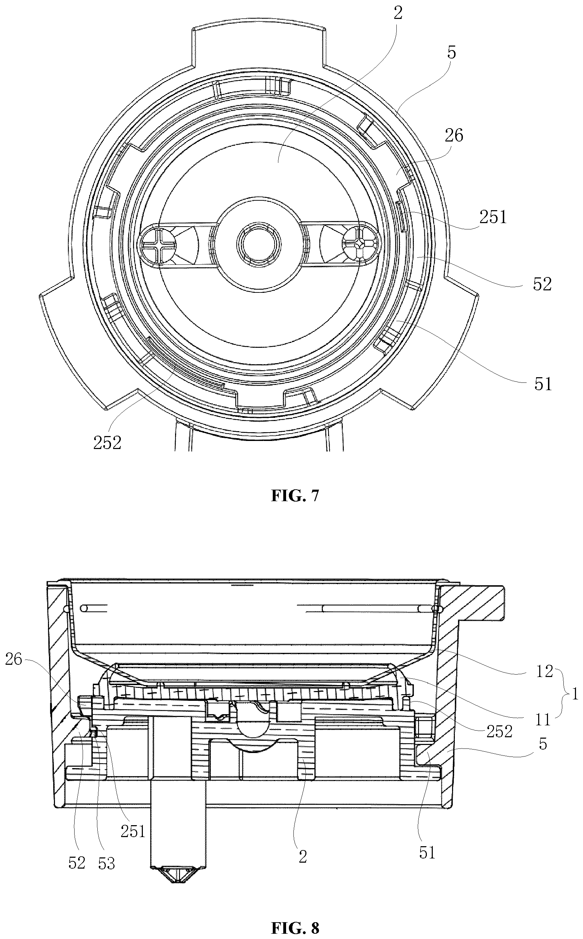

Referring to Fig. 7 and Fig. 8, when the first sliding groove 251 is aligned with the limiting block 53, the drip tray 2 can be inserted from the bottom of the shell 5 to a height so that the lower surface of the fifth limiting part 26 is substantially flush with the upper surface of the second limiting part 52. At this time, the drip tray 2 can rotate clockwise (in a second direction) with respect to the shell 5, so that the limiting block 53 slides in the first sliding groove 251, and the fifth limiting part 26 is rotated to cooperate with the second limiting part 52. At this time, the limiting groove 261 on the lower surface of the fifth limiting part 26 is engaged with the second limiting protrusion 521 for positioning in the circumferential direction. The lower surface of the fifth limiting part 26 abuts against the upper surface of the second limiting part 52, and the limiting block 53 abuts against the lower surface of the first sliding groove 251 to realize axial positioning. The drip tray 2 is thus fixed at a relatively high position in the shell 5, and a filter screen 12 with a smaller capacity, such as a single cup filter screen, may be selected.

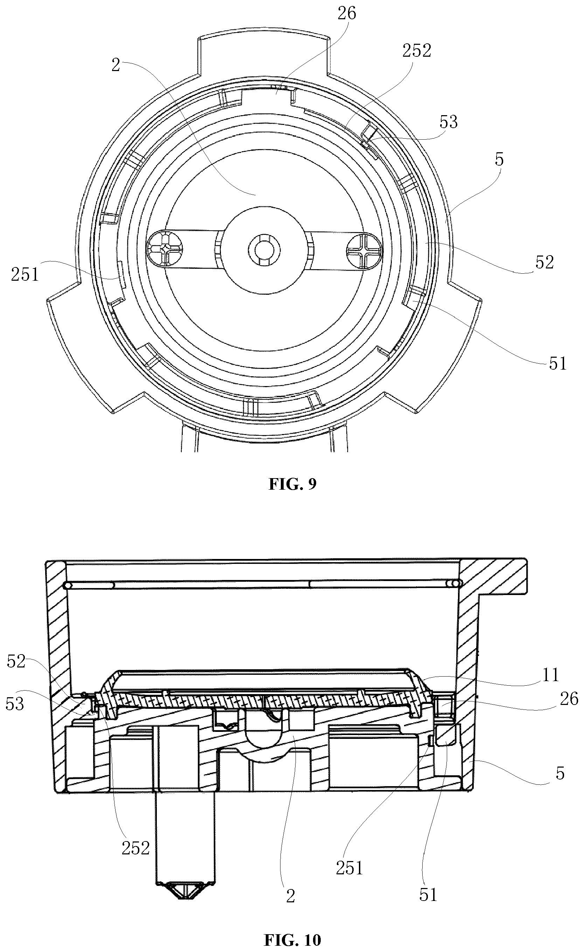

Referring to Fig. 9 and Fig. 10, when the second sliding groove 252 is aligned with the limiting block 53, the drip tray 2 can be inserted from the bottom of the shell 5 to a height so that the lower surface of the fifth limiting part 26 is substantially flush with the upper surface of the first limiting part 51. At this time, the drip tray 2 can rotate counterclockwise (in a first direction) with respect to the shell 5, so that the limiting block 53 slides in the second sliding groove 252, and the fifth limiting part 26 is rotated to cooperate with the first limiting part 51. At this time, the limiting groove 261 on the lower surface of the fifth limiting part 26 is engaged with the first limiting protrusion 511 for positioning in the circumferential direction. The lower surface of the fifth limiting part 26 abuts against the upper surface of the first limiting part 51, and the limiting block 53 abuts against the lower surface of the second sliding groove 252 to realize axial positioning. The drip tray 2 is thus fixed in a relatively low position in the shell 5, and a filter screen 12 with a larger capacity, such as a double cup filter screen, may be selected.

From the above, the first limiting parts 51 and the second limiting parts 52 are located at different positions in the axial direction of the shell 5. The limiting block 53 is used to cooperate with the second sliding groove 252, so that the drip tray 2 can rotate in the first direction to cause the fifth limiting parts 26 to be engaged and fixed with the first limiting parts 51 and accordingly form, for example, a double cup structure. At this time, the coffee box can be used to contain a corresponding amount of coffee powder for two cups of coffee. The limiting block 53 is further used to cooperate with the first sliding groove 251, so that the drip tray 2 can rotate in the second direction to cause the fifth limiting parts 26 to be engaged and fixed with the second limiting parts 52 and accordingly form, for example, a single cup structure. At this time, the coffee box can be used to contain a corresponding amount of coffee powder for a single cup of coffee. The first direction is opposite to the second direction. The upper space formed by the drip tray 2 and the shell 5 is used to install the filter screen assembly 1, wherein the elastic filter tray 11 is disposed above the drip tray 2 and the filter screen 12 is disposed above the elastic filter tray 11. The depth of the filter screen 12 used in the double cup structure is greater than that of the filter screen 12 used in the single cup structure. Therefore, only two filter screens 12 with different depths are needed in order to make different amounts of coffee, so that the production cost is low. Meanwhile, the single cup structure and the double cup structure can be switched simply, and the whole structure is detachable and easy to clean. It can be understood that in practice, the height of the filter screen 12 can also be adjusted by designing the filter screen 12 into a retractable structure. In this way, it is only necessary to adjust the height of the filter screen 12 according to the installation height of the drip tray 2 in order to realize the switching of the single or double cup structure, without the need to provide two different filter screens 12.

It should be noted that this embodiment only uses "single cup" and "double cup" as examples to illustrate the difference of coffee powder capacity corresponding to the coffee box under different mounting positions of the drip tray 2. It is not used to limit that the present invention can only have "single cup" and "double cup" coffee powder capacity under different mounting positions of the drip tray 2, for example, it can also be single cup and three cup, or double cup and three cup, or any other different capacities.

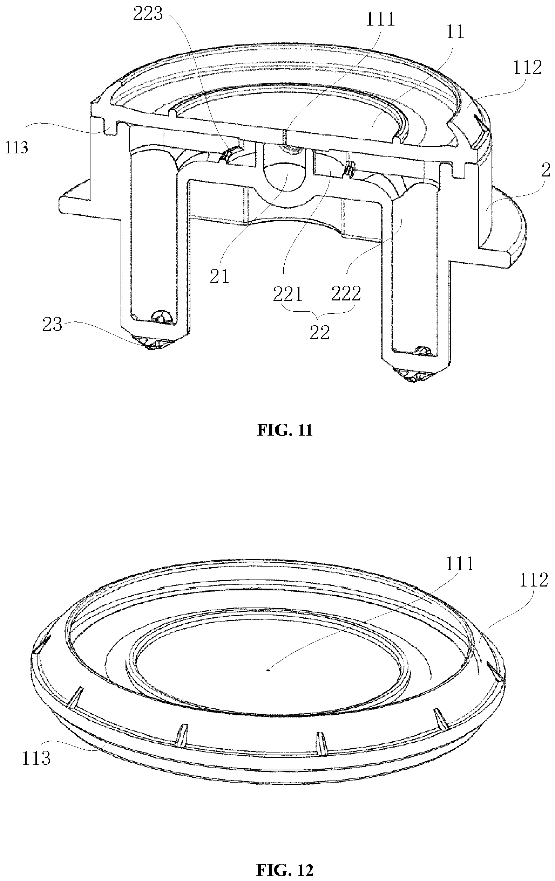

Referring also to Fig. 5, Fig. 6, Fig. 11 and Fig. 12, the elastic filter tray 11 is disposed above the drip tray 2. The drip tray 2 is provided with an extraction groove 21 and a coffee outlet channel 22, and the extraction groove 21 is in fluid communication with the coffee outlet channel 22. The elastic filter tray 11 is provided with at least one filtering hole 111 at the position corresponding to the extraction groove 21. Under the action of pressure, the coffee liquid extracted for the first time can enter the extraction groove 21 via the at least one filtering hole 111 for secondary pressure extraction.

Referring also to Fig. 2 and Fig. 3, in this embodiment, the extraction groove 21 is arranged centrally in the drip tray 2, and the at least one filtering hole 111 is arranged centrally in the elastic filter tray 11. The number of the filtering hole 111 is preferably one. The elastic filter tray 11 may be detachably mounted to the drip tray 2. Specifically, the upper surface of the drip tray 2 is provided with a mounting groove 27, and the lower surface of the elastic filter tray 11 is provided with a mounting rib 113. The mounting rib 113 of the elastic filter tray 11 is clamped into the mounting groove 27 of the drip tray 2 to realize detachable installation, so that the structure is simple and it is easy for cleaning.

The elastic filter tray 11 is made of an elastic material such as silicone. During the extraction process, the coffee liquid above the elastic filter tray 11 is rapidly ejected from the filtering hole 111 under pressure, and then collides with the coffee liquid in the extraction groove 21 or the inner wall of the extraction groove 21 for dispersion, so that the components in the coffee liquid are more evenly dispersed for secondary pressure extraction. In practice, the extraction pressure above the elastic filter tray 11 can be adjusted by configuring the pore size and number of the filtering hole 111. The smaller the size or number the filtering hole 111 is, the greater the extraction pressure is. On the contrary, the larger the size or number the filtering hole 111 is, the smaller the extraction pressure is. Thus, high pressure extraction, low pressure extraction or normal pressure extraction can be realized, wherein the pressure of low pressure extraction is greater than the pressure of normal pressure extraction.

During the extraction process, when the filtering hole 111 on the elastic filter tray 11 is blocked by coffee powder, the extraction pressure above the elastic filter tray 11 will increase gradually. When the extraction pressure increases to a certain extent, the elastic filter tray 11 will deform, causing the filtering hole 111 to become larger, and the coffee powder blocked in the filtering hole 111 will be washed away. After that, the extraction pressure will be restored. This process can be repeated to avoid the blockage of the filtering hole 111 and keep the extraction pressure in a relatively stable state.

The side wall of the extraction groove 21 includes a high part 211 and a low part 212. The high part 211 and the low part 212 jointly define the space of the extraction groove 21. The high part 211 abuts against the lower surface of the elastic filter tray 11 to support the elastic filter tray 11. A coffee liquid outlet is formed between the lower part 212 and the lower surface of the elastic filter tray 11 to enable the extraction groove 21 to be in fluid communication with the coffee outlet channel 22. By setting the lower part 212, the coffee liquid will not flow out of the extraction groove 21 directly after it is ejected into the extraction groove 21, but will flow out of the extraction groove 21 after it reaches a certain amount, to ensure that the coffee liquid in the extraction groove 21 can flow out uniformly.

The coffee outlet channel 22 includes a buffer passage 221 and a discharge passage 222. The buffer passage 221 is arranged in a circle around the extraction groove 21. The buffer passage 221 is in fluid communication with the liquid outlet 23 of the drip tray 2 through the discharge passage 222. A buffer wall 223 is provided at the connection point between the buffer passage 221 and the discharge passage 222, and a middle portion of the buffer wall 223 is depressed to form a cutout for liquid guiding. The discharge passage 222 includes a horizontal part, an inclined part and a vertical part, wherein the horizontal part is in fluid communication with the buffer passage 221, the vertical part is in fluid communication with the liquid outlet 23 of the drip tray 2, and the inclined part is in fluid communication with both the horizontal part and the vertical part. The coffee liquid flowing out of the extraction groove 21 first enters the buffer passage 221. Since the buffer wall 223 is located at the connection point between the buffer passage 221 and the discharge passage 222, the coffee liquid flowing into the buffer passage 221 will not discharge out of the drip tray 2 quickly, and the liquid outflow process is uniform and stable.

In this embodiment, the number of the liquid outlet 23 of the drip tray 2 is two and the two liquid outlets 23 are symmetrically arranged. The side wall of the extraction groove 21 includes two lower parts 212 which are symmetrically arranged to form two symmetrical coffee liquid outlets. The coffee outlet channel 22 includes two discharge passages 222 which are symmetrically arranged, and each discharge passage 222 corresponds to one liquid outlet 23 of the drip tray 2. The connecting line between the two lower parts 212 is orthogonal to the connecting line between the two discharge passages 222. Because the buffer passage 221 and the buffer wall 223 are provided, liquid distribution of the two liquid outlets 23 is uniform, and the liquid output amount from the two liquid outlets 23 is substantially the same, so that the coffee in each cup is uniform. In practice, only one or a plurality of liquid outlets 23 can be provided, which is not limited herein.

In this embodiment, the elastic filter tray 11 further includes a surrounding wall 112 disposed on the upper edge of the elastic filter tray 11, and the surrounding wall 112 is used to abut against the lower surface of the filter screen 12 to form a temporary storage space for coffee liquid in the elastic filter tray 11. The filter screen 12 is a single-layer structure and is detachably connected with the shell 5. For example, as shown in Fig. 1, the filter screen 12 is clamped on the shell 5 through a retaining ring 6, and the single-layer filter screen 12 is cooperated with the elastic filter tray 11 to realize coffee extraction and reduce the probability of blockage of the filter screen assembly 1.

In use, according to the amount of coffee needed to be made, the drip tray 2 is rotated into the shell 5 from a corresponding direction and fixed at a corresponding height. Then, the elastic filter tray 11 is installed above the drip tray 2, and the filter screen 12 with a corresponding size is selected and installed above the elastic filter tray 11. After that, the filter screen 12 is filled with coffee powder, and then the coffee box is installed on a brewing head of a coffee machine. A coffee extraction chamber is formed between the coffee box and the brewing head of the coffee machine. The brewing head flushes hot water into the coffee box and forms an extraction pressure. The filter screen 12 is used to filter the coffee powder to obtain coffee liquid extracted for the first time. After that, the coffee liquid extracted for the first time enters the extraction groove 21 of the drip tray 2 via the filtering hole 111 of the elastic filter tray 11 under pressure, and is discharged after the second pressure extraction for drinking.

As described above, the coffee box of the present invention includes a shell and a drip tray. A first limiting structure, a second limiting structure and a third limiting structure are provided inside the shell. The first limiting structure and the second limiting structure are located at different positions in the axial direction of the shell. The drip tray is provided with a fourth limiting structure and a fifth limiting structure. The drip tray can be rotated in a first direction to cause the fifth limiting structure to be engaged and fixed with the first limiting structure. The drip tray can further be rotated in a second direction to cause the fifth limiting structure to be engaged and fixed with the second limiting structure. The upper space formed between the drip tray and the shell is used to install the filter screen assembly. The drip tray of the coffee box of the present invention can be installed at different positions from different directions to adjust the capacity of the coffee box, the operation is simple, without the need to use various coffee boxes of different specifications to make different quantities of coffee, so that the production cost is low.

In addition, the elastic filter tray is arranged on the top of the drip tray, the drip tray is provided with an extraction groove and a coffee outlet channel, the extraction groove is in fluid communication with the coffee outlet channel, and the elastic filter tray is provided with at least one filtering hole at the position corresponding to the extraction groove. Under pressure, the coffee liquid extracted for the first time can enter the extraction groove via the at least one filtering hole for secondary pressure extraction. The structure is simple and can be used for the second pressure extraction of coffee. The filtering hole on the elastic filter tray can be elastically deformed and is not easy to be blocked, to ensure the pressure stability of each extraction and improve the taste of coffee.

### Second embodiment

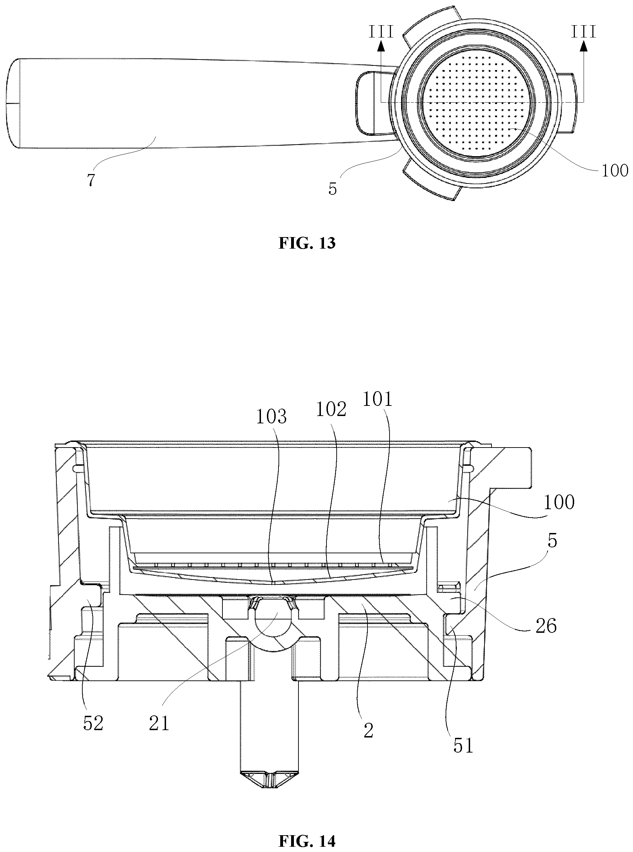

Fig. 13 is a top schematic view of a coffee box according to the second embodiment. Fig. 14 is a sectional view of the coffee box in Fig. 13 along the III-III line. As shown in Fig. 13 and Fig. 14, the coffee box of this embodiment includes a shell 5, a drip tray 2 and a filter screen assembly 100. The filter screen assembly 100 and the drip tray 2 are detachably installed in the shell 5 and arranged along the top-to-bottom direction.

Similar to the first embodiment, the shell 5 is cylindrical in shape, and an outer wall of the shell 5 is provided with a handle 7 to facilitate the use of the coffee box. A first limiting structure, a second limiting structure and a third limiting structure are provided inside the shell 5. The first limiting structure and the second limiting structure are located at different positions in the axial direction of the shell 5, that is, the first limiting structure and the second limiting structure are arranged at different heights in the shell 5.

Referring to Figs. 3-4 together, the first limiting structure includes at least two first limiting parts 51 spaced apart along the circumferential direction of the shell 5. The second limiting structure includes at least two second limiting parts 52 spaced apart along the circumferential direction of the shell 5. Each first limiting part 51 and each second limiting part 52 protrude from the inner surface of the side wall of the shell 5 and extend along the circumferential direction of the shell 5. Preferably, the first limiting parts 51 have three in number and they are evenly spaced, the second limiting parts 52 have three in number and they are evenly spaced. The first limiting parts 51 are closer to the bottom of the shell 5 than the second limiting parts 52. One second limiting part 52 is arranged between two adjacent first limiting parts 51. A passage 56 is provided between each first limiting part 51 and a neighboring second limiting part 52 for the drip tray 2 to insert from the bottom of the shell 5 and move upward towards the top of the shell 5.

The third limiting structure protrudes from the side surface of the first limiting structure or the second limiting structure. Specifically, the third limiting structure is a limiting block 53 protruding from the side surface of one first limiting part 51 or one second limiting part 52. It can be understood that the third limiting structure can also be a limiting block 53 protruding from the inner wall of the shell 5, so long as the front end of the limiting block 53 extends beyond the side surface of the first limiting part 51 or the second limiting part 52, and the limiting block 53 can be cooperated with the drip tray 2 without interference to the movement of the drip tray 2.

Referring to Figs. 5-6 together, the drip tray 2 is provided with a fourth limiting structure and a fifth limiting structure. The fourth limiting structure is used to cooperate with the third limiting structure to restrict the rotation direction of the drip tray 2. The fifth limiting structure is used to cooperate with the first limiting structure or the second limiting structure to fix the drip tray 2 at different positions in the shell 5.

The fifth limiting structure includes at least two fifth limiting parts 26 spaced apart along the circumferential direction of the drip tray 2. The fifth limiting parts 26 protrude from the outer surface of the side wall of the drip tray 2 and are located on the same plane. Preferably, the fifth limiting parts 26 have three in number and they are evenly spaced. The lower surface of the fifth limiting part 26 is cooperated with the upper surface of the first limiting part 51 or the second limiting part 52 for positioning. Specifically, the upper surface of the first limiting part 51 is provided with a first limiting protrusion 511, the upper surface of the second limiting part 52 is provided with a second limiting protrusion 521, the lower surface of the fifth limiting part 26 is provided with a limiting groove 261, and the limiting groove 261 is cooperated with the first limiting protrusion 511 or the second limiting protrusion 521 to restrict the circumferential movement of the drip tray 2 at different axial positions, that is, to restrict the rotation of the drip tray 2.

The fourth limiting structure includes a first sliding groove 251 and a second sliding groove 252 spaced apart on the outer surface of the side wall of the drip tray 2. The first sliding groove 251 and the second sliding groove 252 each extend along the circumferential direction of the drip tray 2, and the second sliding groove 252 is closer to the top of the drip tray 2 than the first sliding groove 251. When the first sliding groove 251 or the second sliding groove 252 is aligned with the limiting block 53 on the shell 5, the fifth limiting part 26 is aligned with the passage 56 between the first limiting part 51 and the second limiting part 52. At this time, the drip tray 2 can be inserted into a corresponding height from the bottom of the shell 5, and the rotation direction of the drip tray 2 at this height is determined by the cooperation of the first sliding groove 251 or the second sliding groove 252 with the limiting block 53.

The operation relating to the mounting of the drip tray 2 at different mounting positions can refer to the description in the first embodiment and will not be repeated herein again.

Different from the first embodiment, the filter screen assembly 100 in this embodiment is a double-layer filter screen. The filter screen assembly 100 includes an upper filter screen 101 and a lower filter screen 102. The lower filter screen 102 is provided with at least one filtering hole 103 at the position corresponding to the extraction groove 21 of the drip tray 2. Under the action of pressure, the coffee liquid extracted for the first time can enter the drip tray 2 via at least one filtering hole 103 for secondary extraction, and the structure is simple. The flow channel structure of the drip tray 2 can refer to the description in the first embodiment and will not be repeated herein again.

In the coffee box of the present invention, the drip tray can be installed at different positions from different directions to adjust the capacity of the coffee box, and the operation is simple, without the need to provide various coffee boxes of different specifications to make different quantities of coffee, so that the production cost is low.

The above-mentioned embodiments only illustrate the principle and the effects of the present invention, and are not used to limit the present invention. Any person familiar with the technology may modify or change the above-mentioned embodiments without departing from the spirit and scope of this invention. Therefore, all equivalent modifications or changes made by a person with ordinary skill in the field without departing from the spirit and technical ideas disclosed in the present invention shall still be covered by the claims of the present invention.

## Claims

1. A coffee extraction assembly comprising an elastic filter tray (11) and a drip tray (2), wherein the elastic filter tray (11) is disposed above the drip tray (2), the drip tray (2) is provided with an extraction groove (21) and a coffee outlet channel (22), the extraction groove (21) is in fluid communication with the coffee outlet channel (22), the elastic filter tray (11) is provided with at least one filtering hole (111) at a position corresponding to the extraction groove (21), the coffee liquid extracted for the first time enters the extraction groove (21) via the at least one filtering hole (111) under pressure.

2. The coffee extraction assembly according to claim **1,** wherein a side wall of the extraction groove (21) comprises a high part (211) and a low part (212), the high part (211) abuts against a lower surface of the elastic filter tray (11), a coffee liquid outlet is formed between the lower part (211) and the lower surface of the elastic filter tray (11) to enable the extraction groove (21) to be in fluid communication with the coffee outlet channel (22).

3. The coffee extraction assembly according to claim **2,** wherein the coffee outlet channel (22) comprises a buffer passage (221) and a discharge passage (222), the buffer passage (221) is arranged in a circle around the extraction groove (21), the buffer passage (221) is in fluid communication with a liquid outlet (23) of the drip tray (2) through the discharge passage (222), a buffer wall (223) is provided at the connection point between the buffer passage (221) and the discharge passage (222).

4. The coffee extraction assembly according to claim **3,** wherein the side wall of the extraction groove (21) comprises two low parts (212) which are symmetrically arranged, the coffee outlet channel (22) comprises two discharge passages (22) which are symmetrically arranged, a connecting line between the two lower parts (212) is orthogonal to a connecting line between the two discharge passages (222).

5. The coffee extraction assembly according to claim **1,** wherein the extraction groove (21) is arranged centrally in the drip tray (2), and the at least one filtering hole (111) is arranged centrally in the elastic filter tray (11).

6. The coffee extraction assembly according to claim **1,** wherein an upper surface of the drip tray (2) is provided with a mounting groove (27), a lower surface of the elastic filter tray (11) is provided with a mounting rib (113), the elastic filter tray (11) and the drip tray (2) are detachably connected through a cooperation of the mounting rib (113) and the mounting groove (27).

7. The coffee extraction assembly according to claim **1,** wherein the elastic filter tray (11) comprises a surrounding wall (112) on an upper edge of the elastic filter tray (11), the surrounding wall (112) is configured to abut against a lower surface of the filter screen (12).

8. A coffee box comprising a filter screen (12), a shell (5) and a coffee extraction assembly according to any one of claims **1** to **7,** wherein the filter screen (12) and the coffee extraction assembly are installed in the shell (5) and arranged along the top-to-bottom direction, the filter screen (12) is configured to filter the coffee powder to obtain the coffee liquid extracted for the first time.

9. The coffee box according to claim **8,** wherein a first limiting structure, a second limiting structure and a third limiting structure are provided inside the shell (5), the first limiting structure and the second limiting structure are located at different positions in an axial direction of the shell (5), the drip tray (2) is provided with a fourth limiting structure and a fifth limiting structure, the fourth limiting structure is configured to cooperate with the third limiting structure to restrict the rotation direction of the drip tray (2), the fifth limiting structure is configured to cooperate with the first limiting structure or the second limiting structure to fix the drip tray (2) at different positions in the axial direction of the shell (5).

10. The coffee box according to claim **9,** wherein the fourth limiting structure is configured to cooperate with the third limiting structure to restrict the drip tray (2) to be rotated in a first direction and a second direction, when the drip tray (2) is rotated in the first direction, the fifth limiting structure is engaged and fixed with the first limiting structure, when the drip tray (2) is rotated in the second direction, the fifth limiting structure is engaged and fixed with the second limiting structure, wherein the first direction is opposite to the second direction.

11. The coffee box according to claim **10,** wherein the first limiting structure comprises at least two first limiting parts (51) spaced apart along a circumferential direction of the shell (5), the second limiting structure comprises at least two second limiting parts (52) spaced apart along the circumferential direction of the shell (5), each first limiting part (51) and each second limiting part (52) protrude from an inner surface of a side wall of the shell (5) and extend along the circumferential direction of the shell (5), the fifth limiting structure comprises at least two fifth limiting parts (26) spaced apart along a circumferential direction of the drip tray (2), the fifth limiting parts (26) protrude from an outer surface of a side wall of the drip tray (2) and are located on the same plane, a lower surface of the fifth limiting part (26) is cooperated with an upper surface of the first limiting part (51) or the second limiting part (52).

12. The coffee box according to claim **11,** wherein the first limiting parts (51) are closer to the bottom of the shell (5) than the second limiting parts (52), one second limiting part (52) is arranged between two adjacent first limiting parts (51), a passage (56) is provided between each first limiting part (51) and a neighboring second limiting part (52) for the fifth limiting part (26) to insert into the shell (5).

13. The coffee box according to claim **11,** wherein an upper surface of the first limiting part (51) is provided with a first limiting protrusion (511), an upper surface of the second limiting part (52) is provided with a second limiting protrusion (521), a lower surface of the fifth limiting part (26) is provided with a limiting groove (261), and the limiting groove (261) is cooperated with the first limiting protrusion (511) or the second limiting protrusion (521) to restrict the circumferential movement of the drip tray (2).

14. The coffee box according to claim **11,** wherein the third limiting structure is a limiting block (53) protruding from a side surface of one first limiting part (51) or one second limiting part (52), the fourth limiting structure comprises a first sliding groove (251) and a second sliding groove (252) spaced apart on the outer surface of the side wall of the drip tray (2), the first sliding groove (251) and the second sliding groove (252) each extend along a circumferential direction of the drip tray (2), the second sliding groove (252) is closer to the top of the drip tray (2) than the first sliding groove (251);
when the drip tray (2) is rotated in the first direction, the limiting block (53) slides in the second sliding groove (252), and the fifth limiting part (26) is rotated to be engaged and fixed with the first limiting part (51);
when the drip tray (2) is rotated in the second direction, the limiting block (53) slides in the first sliding groove (251), and the fifth limiting part (26) is rotated to be engaged and fixed with the second limiting part (52).

15. The coffee box according to claim **8,** wherein an upper space formed by the drip tray (2) and the shell (5) is configured to install the elastic filter tray (11) and the filter screen (12), and the filter screen (12) is disposed above the elastic filter tray (11).

16. A coffee machine comprising the coffee box according to any one of claims **8** to **15.**
